# EUROPEAN PATENT SPECIFICATION

(11) **EP 4 454 923 B1**
(45) Date of publication and mention of the grant of the patent: **15.10.2025**
(21) Application number: 24171853.5
(22) Date of filing: 23.04.2024
(51) Int. Cl.: B60K 17/00, B60K 17/04, B60K 7/00, B60B 3/00, B60B 3/04

(54) **IMPROVED WHEEL FOR A WHEEL HUB HAVING INTEGRATED ELECTRIC TRACTION**
VERBESSERTES RAD FÜR EINE RADNABE MIT INTEGRIERTEM ELEKTRISCHEM ANTRIEB
ROUE AMÉLIORÉE POUR UN MOYEU DE ROUE À TRACTION ÉLECTRIQUE INTÉGRÉE

(30) Priority: 28.04.2023 IT 202300008427
(43) Date of publication of application: 30.10.2024
(73) Proprietor: IVECO S.P.A., 10156 Torino (IT)
(72) Inventor: PEREIRA DE LEMOS, Josè Francivaldo, 10156 TORINO (IT); AIMO BOOT, Marco, 10156 TORINO (IT); BERNARDINI, Alessandro, 10156 TORINO (IT)
(74) Representative: Studio Torta S.p.A.

(56) References cited:
- WO-A1-2011/076009
- WO-A1-2019/020898
- CN-U- 211 138 906

## Description

### TECHNICAL SECTOR

The present invention relates to a vehicle wheel, in particular a wheel for a wheel hub having integrated electric traction for an axle of a heavy vehicle.

### BACKGROUND OF THE INVENTION

Heavy goods vehicles for road transport, for example trucks, tend to be increasingly electrified to reduce their pollutant emissions. In particular, such vehicles can be hybrid vehicles or purely electric vehicles.

In particular, the electric vehicles comprise at least one electric axle, viz., an axle provided with electric machines such as motors/generators configured to impart a torque to the wheel hubs to allow the movement thereof or to recharge the battery modules of the vehicle when the latter is braking.

However, the need is always felt to improve the existing electric axles in order to reduce the footprint due to the presence of electric machines which affect the usable space of the vehicle as well as force modifications to the suspension systems.

A similar need is felt for wheels which can be optimally mounted on electric axles without compromising the structural characteristics thereof.

Examples of known wheels are disclosed in patent publications WO2011/076009 A1, WO2019/020898 A1 or CN211138906 U.

The aim of the present invention is to fulfil the above-mentioned needs in an optimised and cost-effective manner.

### SUMMARY OF THE INVENTION

The aforesaid aim is achieved by a wheel, a wheel hub having integrated electric traction, an axle and a vehicle as claimed in the attached claims.

### BRIEF DESCRIPTION OF THE DRAWINGS

An embodiment is described below for a better understanding of the present invention, provided by way of non-limiting example with reference to the accompanying drawings, wherein:
- Figure 1 is a schematic longitudinal sectional view of a wheel hub having integrated electric traction given by a wheel according to the invention illustrating first functional elements;
- Figure 2 is a schematic longitudinal sectional view of a wheel hub having integrated electric traction given by a wheel rim according to the invention illustrating second functional elements and the torque lines transmitted during the operation of the wheel hub according to the invention;
- Figure 3 is a partially exploded perspective view of the wheel hub of figures 1 and 2;

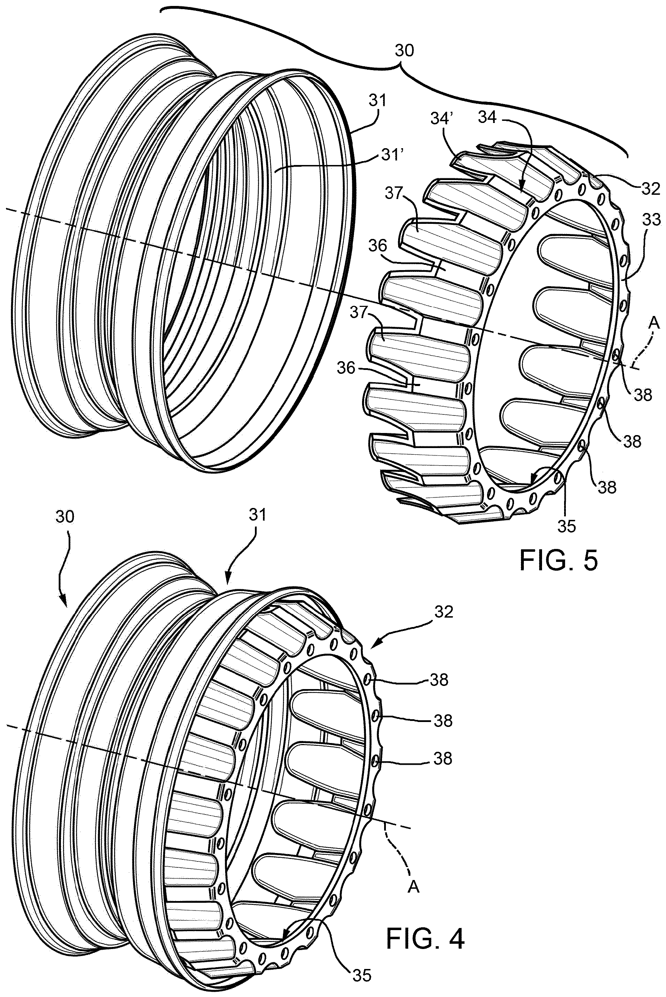

- Figure 4 is a perspective view of a wheel for a wheel hub having integrated electric traction according to the invention;
- Figure 5 is an exploded perspective view of the wheel of figure 4;

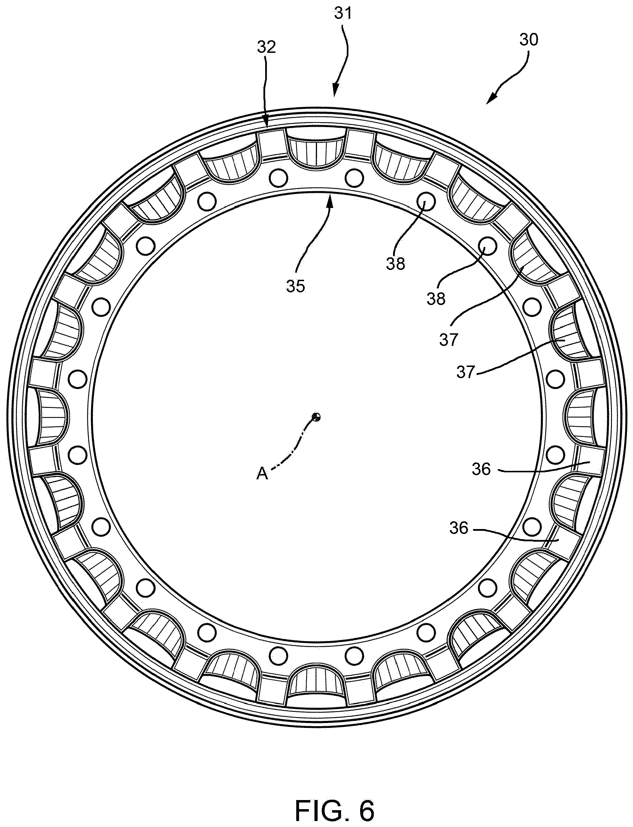

- Figure 6 is a front view of the wheel of figure 4;
- Figure 7 is a perspective view of an axle given by wheel for a wheel hub having integrated electric traction according to the invention.

### DETAILED DESCRIPTION OF THE INVENTION

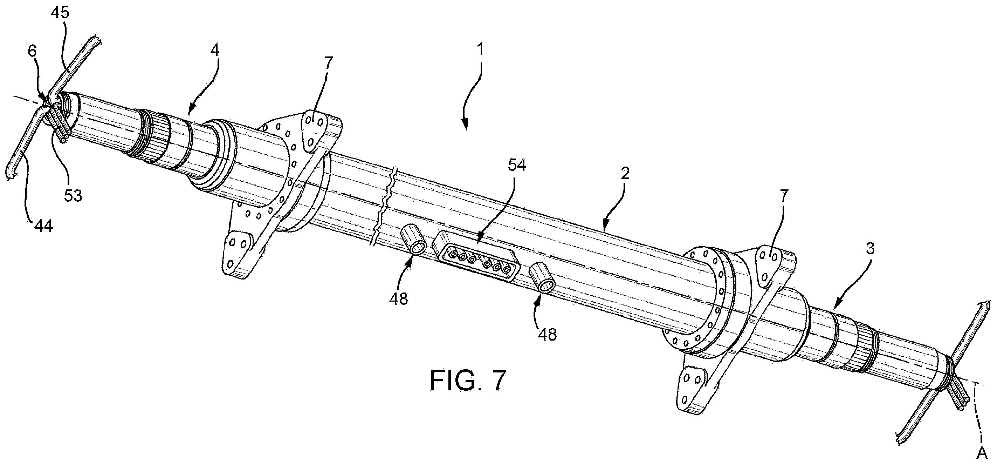

In figure 7, an axle of a vehicle, preferably a heavy vehicle, for example a truck and not illustrated, comprising essentially a central portion 2 and a pair of end portions 3, 4 connected by opposite parts to the central portion 2, preferably rigidly, along a longitudinal axis A thereof, is referred to with the number 1.

The central portion 2 is advantageously hollow so as to define a space 5 suitable for housing functional elements of the vehicle as described below. Preferably, the end portions 3, 4 are equally hollow so as to define a continuous space 5 along the entire extension of the axle 1 along the axis A.

The end portions 3, 4 are provided with openings 6 configured to allow access to the space 5 as described below.

Preferably, the axle 1 comprises at least one flange 7 arranged near each of the end portions 3, 4 and rigidly carried by these or, as in the illustrated case, by the central portion 2 and configured to support operating elements of the vehicle, such as mechanical brakes or sensor means.

The axle 1 comprises a pair of wheel hubs 10 comprising a fixed portion 8 rigidly carried by the respective end portion 3, 4 and a movable portion 9 rotationally carried in a free manner by the respective end portion 3, 4.

With regard to the wheel hubs 10, reference will be made to only one of them for the sake of simplicity, for example the left one, and the considerations below also apply in the same manner to the right wheel hub, of course, as the structure described herein is mirrored with respect to a longitudinal plane of the vehicle.

The fixed portion 8 is advantageously cup-shaped and comprises a radial wall 8' connected to the end portion 4 and extending perpendicularly to the longitudinal axis A and a cylindrical wall 8" extending starting from the radial wall 8' towards the vehicle, viz., towards the intermediate portion 2 of the axle 1.

The radial wall 8' is advantageously connected to the end portion 4 by means of a rigid connection, such as an interference fit connection. Preferably, the radial wall is 8' made in a single piece with the cylindrical wall 8''.

The cylindrical wall 8'' is supported, on the opposite side of the radial wall 8' with respect to the movable portion 9, in a rotationally free manner by supporting means 11 such as rolling bearings. In the described embodiment, the cylindrical wall 8'' cooperates with the supporting means 11 by means of a supporting element 12 rigidly connected to the cylindrical wall 8'' and extending radially towards the aforesaid supporting means 11.

Preferably the cylindrical wall 8'' cooperates as described above with the movable portion 9 sealingly by sealing means 13, such as rotating sealing rings, so as to delimit a space 14 isolated from the external environment radially delimited around the axis A by the cylindrical wall 8" and axially delimited by the radial wall 8' and by the movable portion 9.

The wheel hub 10 comprises, housed in the space 14, an electric machine 15 provided with a stator 15' and a rotor 15" operatively driven by the stator 15" and a transmission 16 operatively connecting the rotor 15" to the movable portion 9 so as to vary the transmitted speed/torque thereof with respect to that originally provided to the rotor 15".

In particular, the stator 15' is rigidly carried by the fixed portion 8, in particular by the cylindrical wall 8'' and therefore extends along the axis A within the space 14.

The transmission 16 is advantageously sized so as to be housed radially within the rotor 15'' and particularly also axially comprised by the rotor 15".

In more detail, the rotor 15'' is connected to a rotor support 17 carried in a rotationally free manner with respect to the fixed portion 8, in particular with respect to the radial wall 8', viz., to a flanged portion extending with respect thereto.

The rotor support 17 extends radially within the rotor 15 and substantially has the shape of an annular disc housed around the end portion 4. The rotor support 17 is operatively connected by means of the transmission 16 to the movable portion 9.

In detail, the transmission 16 comprises a gear, advantageously a differential gear.

In more detail, the transmission 16 comprises a first conical gear wheel 21 rigidly connected to the rotor support 17 and rotationally free with respect to the end 4, a second conical gear wheel 22 rigidly carried by the end 4 and a plurality of planetary gears 23 operatively cooperating with the first and the second conical gear wheels 21, 22.

The planetary gears 23 can be in various number and are supported in a rotationally free manner with respect to the plane of axis B perpendicular to the axis A by means of respective pins 24. Merely by way of example, there are four planetary gears 23 supported by respective pins 24 arranged in a cross therebetween.

Each pin 23 is rigidly carried by a planetary carrier 25 rigidly connected to the movable portion 9.

The transmission 16 is provided with sealing means 13, for example carried between the first gear wheel 21 and the end 4 further configured to isolate the space 14.

Thereby, the space 14 can be supplied with lubricating fluid, such as oil, by means of a nozzle 26, for example, carried by the rotating portion 9 so as to lubricate the transmission 16.

The movable portion 9, as mentioned above, is supported in a rotationally free manner by supporting means 12, such as rolling bearings, on the end 4. In the embodiment described, it comprises a main movable portion 9' and an auxiliary movable portion 9'' rigidly connected to each other.

Advantageously, the main movable portion 9' essentially comprises a main portion 9a, preferably an annular disc, cooperating with the aforesaid supporting means 12 and a first flanged portion 9b extending cantilevered axially along the axis A with respect to the main portion 9a and rigidly connected to the planetary carrier 25. Consequently, the first flanged portion 9b extends radially within the rotor 15".

Advantageously, the main movable portion 9' comprises a second flanged portion 9c extending radially from the main portion 9a and rigidly connected to a wheel 30 as described in detail below.

The auxiliary movable portion 9'' extends on the opposite side of the fixed portion 8 and is configured to provide support for operating elements of the vehicle, such as sensors or other elements which must be integral with the movable portion 9.

The wheel hub 10 further comprises a conditioning system 40 configured to cool the fixed portion 8, viz., the stator 15' connected thereto. Advantageously, the conditioning system 40 is a fluidised conditioning system.

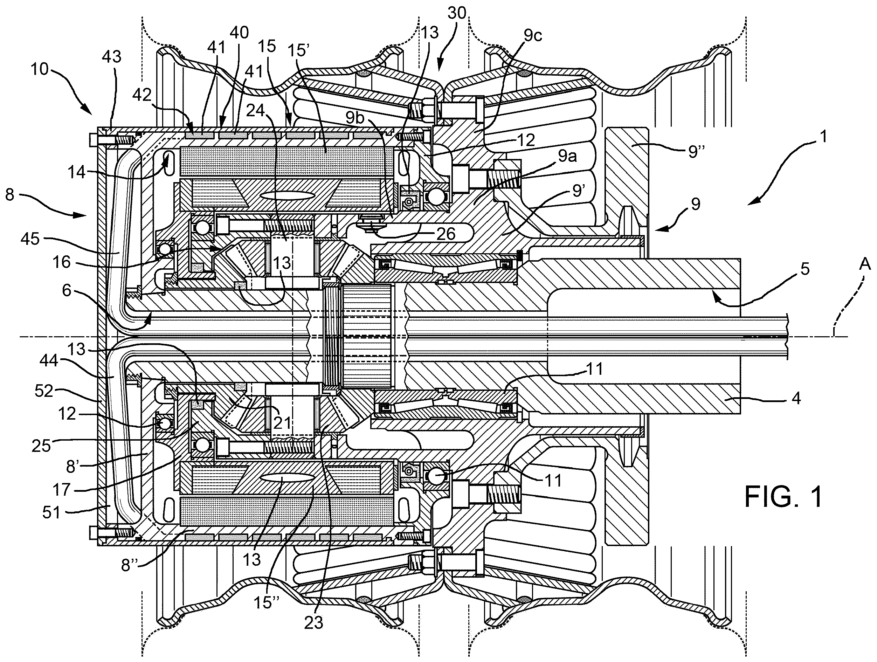

As can be seen in figures 1 to 3, the conditioning system 40 comprises a plurality of conduits 41 in which a conditioning fluid flows and adjacent to the stator 15'. Advantageously, such conduits 41 are integrated in the fixed portion 8, viz., in the cylindrical portion 8''.

Advantageously, such conduits 41 are made as grooves 42 defined radially recessed with respect to the surface opposite the space 14 of the cylindrical portion 8'' and isolated from the external environment by means of a lid 43 rigidly carried on the cylindrical portion, sealingly, so as to delimit such conduits 41.

The conduits 41 are fluidically connected to a delivery conduit 44 and a return conduit 45 configured to supply the low-temperature conditioning fluid and collect the hightemperature conditioning fluid once it has flowed in the conduits 41 to cool the fixed portion 8.

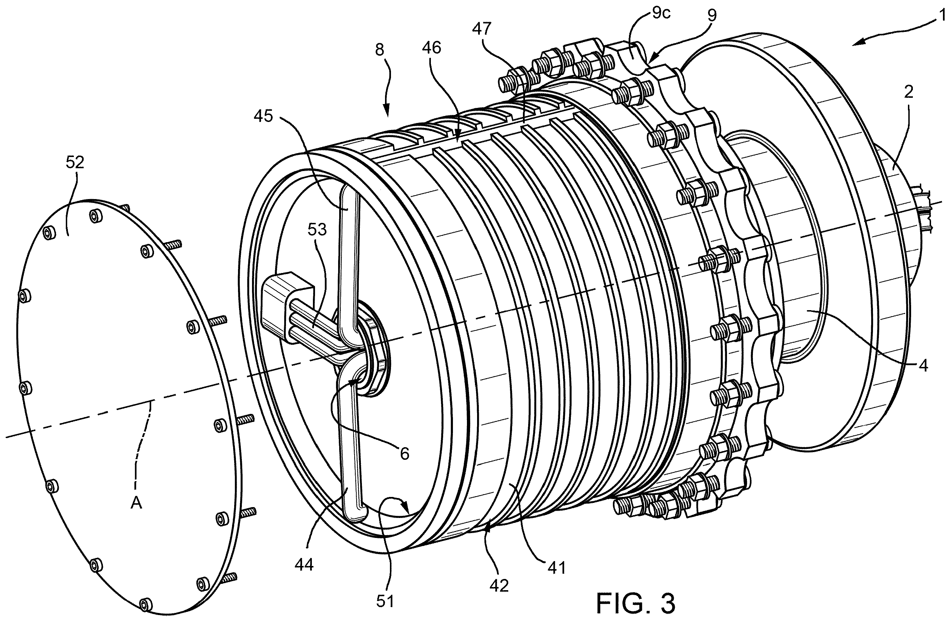

As better illustrated in figure 3, the conduits 41 are essentially circumferential around the axis A and advantageously with a quadrangular section. In particular, they are equal in size to each other and equally spaced along the axis A.

Advantageously, the conduits 41 are fluidically connected to the delivery conduit 44 and the return conduit 45 by means of respective manifolds 46 advantageously integrated in the fixed portion 8, viz., in the cylindrical portion 8''.

Advantageously, such manifolds 46 are made as a single groove 47 defined radially recessed with respect to the surface opposite the space 14 of the cylindrical portion 8'' and isolated from the external environment by means of the same lid 43 delimiting the conduits 41. In detail, the groove 47 extends along the axis A for the entire length of the cylindrical portion 8'' in which the conduits 41 are made so as to be able to fluidically communicate with each of the latter.

The delivery and return conduits 44, 45 are fluidically connected to a heat exchanger system (not shown) of the vehicle, for example a passive heat exchanger such as an air cooler or an active device such as a refrigeration-type conditioning circuit.

Advantageously, the delivery conduits 44, 45 are housed within the space 5 and extend between respective fluidic connectors 48, as visible in figure 7, configured to allow the connection with further pipes (not illustrated) connecting to the aforesaid heat exchanger of the vehicle. Preferably, the fluidic connectors 48 are made in the central portion 2 of the axle 1.

On the opposite side, the delivery conduits 44, 45 exit from the space 5 by means of the opening 6 and are directed to connect to the manifolds 46 within a space 51 delimited between the fixed portion 8 and a head element 52 connected thereto.

Such a space 51 is therefore radially delimited by the fixed portion 8, in particular by a flange extending between the cylindrical portion 8'' and the radial portion 8' on the opposite side of the cylindrical portion 8'' and axially delimited by the head element 52 and by the radial portion 8'.

In particular, the head element 52, in the embodiment illustrated, is rigidly connected to the lid 43. Clearly, it could be made in a single piece therewith in an alternative embodiment.

The wheel hub 10 further comprises cables 53 for the electrical connection of the electric machine 15 with electrical energy storage means (not illustrated) such as a battery, of the vehicle.

The cables 53 are advantageously housed within the space 5 and extend between respective electrical connectors 54, as visible in figure 7, configured to allow the connection with further cables (not illustrated) connecting to the aforesaid electrical energy storage means. Preferably, the electrical connectors 54 are made in the central portion 2 of the axle 1.

On the other side, the cables 43 exit from the space 5 by means of the opening 6 in the aforesaid space 51 and pass through a dedicated, sealed opening in the space 14, towards the stator 15' of the electric machine 15.

Returning to the wheel 30, it comprises a rim 31 configured to cooperate with a tire of the vehicle and a disc 32 rigidly connected to each other, for example by welding, as is well known.

In particular, the disc 32 is shaped so as to allow the housing of the wheel hub 10 therein.

In more detail, the disc 32 comprises a coupling portion 33, advantageously comprising an annular disc and a structural portion 34 configured to provide adequate stiffness to the wheel 30 and allow the connection with the rim 31.

In detail, the structural portion 34 is rigidly connected to a connecting portion 34' thereof which is opposite that connected to the coupling portion 33 to the rim 31, viz., to an internal radial surface 31' thereof.

Advantageously, the structural portion 34 is inclined along the axis A and has a substantially frusto-conical annular disc shape so as to have a larger opening diameter at the rim 31 and a smaller opening diameter 35 at the coupling portion 33.

In detail, the structural portion 34 is inclined between the larger diameter and the smaller opening diameter 35 by a value between 15° and 25°, in particular 20°. The inclination provided allows to obtain a smaller opening diameter 35 by at least 400 mm.

In detail, the structural portion 34 has a corrugated extension, made circumferentially to the axis A. In greater detail, such a corrugated profile comprises a plurality of grooves 36 made parallel to the axis A alternated with each other by a plurality of ridges 37.

Furthermore, the grooves 36 are of substantially curved section, advantageously concave facing towards the rim 31. In more detail, the ridges 37 define a substantially flat surface of constant section between the connecting portion 34' and the coupling portion 33.

Advantageously, both the grooves 36 and the ridges 37 each have an equal shape to one another. Thereby, preferably, they are angularly equidistant around the axis A.

The coupling portion 33 is substantially flat and defines a plurality of openings 38, advantageously equally spaced circumferentially with respect to the axis A to allow the fixing, for example as illustrated by threaded means, to the flange 9c of the movable portion 9.

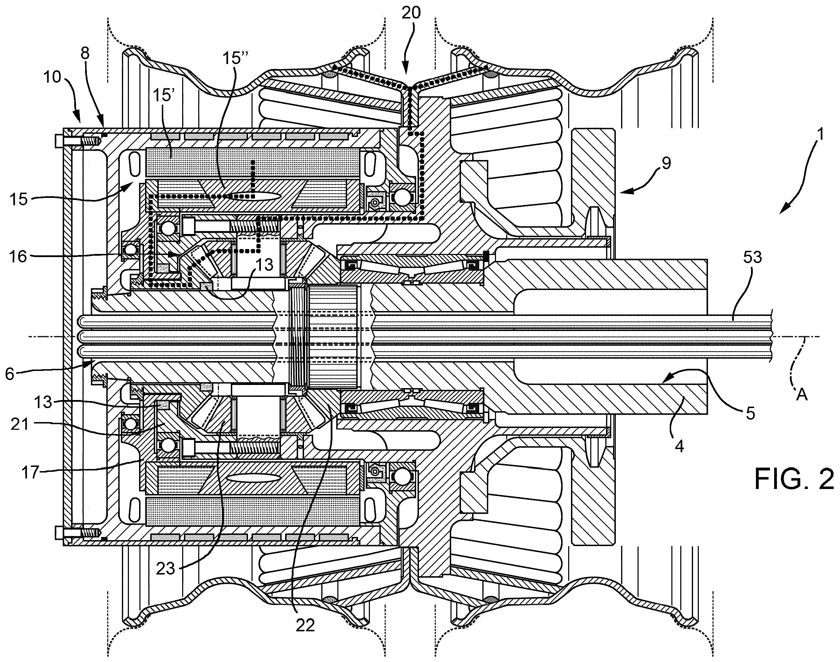

The operation of the embodiment of the wheel hub, axle and vehicle according to the invention described above is as follows, referring to the torque lines of figure 2.

In a first operating condition, of traction, the stator 15', uses the electrical energy supplied thereto by the electrical cables 53 to cooperate electromagnetically with the rotor 15", carrying it into rotation; the latter rotates integrally with the rotor support 17, which in turn drags the gear wheel 21. The latter rotates the planetary carriers 23 which mesh between the gear wheels 21 and 22, carrying the planetary carrier 25 into rotation by means of the pins 24. Thereby, the planetary carrier 25 drags the movable portion 9 to which it is connected, which is directly connected to the wheel 30, which is thus carried into rotation, moving the vehicle.

In a second, regenerative operating condition, the wheel 30 carries the movable portion 9 into rotation, which carries the planetary carrier 25 into rotation, which drags the planetary carriers 23 by means of the pins 24, which meshing between the wheels 21 and 22 carry the rotor support 17 into rotation. The latter then rotates the rotor 15'', which, by interacting electromagnetically with the stator 15', generates electricity which will be stored by means of the electrical cables 53 in the energy storage means of the vehicle.

From the above, the advantages of a wheel, a wheel hub, axle and vehicle according to the invention are clear.

The use of a wheel as illustrated allows the wheel hub to be housed internally easily without however compromising the structural properties thereof.

In fact, the particular inclination of the disc in addition to the corrugated shape allows a high moment of inertia to be obtained, which allows to support the loads acting thereon.

Further, the manufacture of the disc of the wheel illustrated is particularly inexpensive, as it does not involve the step of punching holes according to the known art.

It is further possible to provide an axle having integrated electric traction by means of the hub having integrated electric with low sizes and weights.

In particular, the housing of the electric machine in the wheel hub and the transmission within the free space of the rotor allows to obtain a traction system which is compact, light and isolated from the external environment and therefore protected from wear and the ingress of dirt.

Furthermore, the integration of the cooling and electrical power supply systems passage inside the axle and the passage of the head space allows an easy and optimised assembly, reducing axle manufacturing time.

Furthermore, the proposed axle and the proposed wheel hub are modular and scalable as a function of different vehicle types and sizes.

Finally, it is clear that modifications and variations can be made to the wheel, the wheel hub, axle and vehicle according to the present invention which, however, do not depart from the scope of protection defined by the claims.

Of course, as mentioned, the shapes of the axle 1 and wheel hub 10 can have different shapes and be made of several different parts.

Further, the described gear wheels and gears could vary as well as elements not described and of known existence for the assembly of a hub, axle and vehicle according to the present invention could be present.

Furthermore, although a twin wheel solution is described, the wheel hub can be applied to any type of wheel, even a single one.

## Claims

1. Wheel (30) configured to be connected to a wheel hub (10) of an axle (1) of a heavy vehicle, said wheel (30) comprising a rim (31) suitable for cooperating with a tire of said vehicle and a disc (32) connected rigidly to said rim (31) and configured to be connected to said wheel hub (10), said disc (32) comprising a coupling portion (33) configured to connect said disc (32) to said wheel hub (10) and a structural portion (34) connecting said rim (31) to said coupling portion (33), wherein said structural portion (34) is inclined along an axis (A) of said wheel (30) and is tapered between a connecting portion (34') with said rim (31) and said coupling portion (33), said inclination being between 15° and 25°,
said wheel (30) being **characterized in that** said structural portion (34) defining a corrugated profile circumferentially along said axis (A).

2. Wheel according to claim 1, wherein said inclination is 20°.

3. Wheel according to claim 1 or 2, wherein said structural portion (34) is substantially a frusto-conical ring.

4. Wheel according to claim 1 to 3, wherein said corrugated profile comprises a plurality of grooves (36) extending parallel to said axis (A) alternated with each other by a plurality of ridges (37).

5. Wheel according to claim 4, wherein said grooves (36) have the same shape with each other.

6. Wheel according to claim 4 or 5, wherein said ridges (37) have the same shape with each other.

7. Wheel according to one of claims 4 to 6, wherein said grooves (36) have a curved section.

8. Wheel according to claim 7, wherein said curved section is concave towards said rim (31).

9. Wheel according to one of claims 4 to 8, wherein said ridges define a flat and substantially constant surface between said connecting portion (34') and said coupling portion (33).

10. Wheel according to one of the preceding claims, wherein said coupling portion (33) extends radially with respect to said axis (A).

11. Wheel according to one of the preceding claims, wherein said coupling portion (33) has the shape of a ring.

12. Wheel according to one of the preceding claims, wherein said coupling portion (33) defines a circular opening, said circular opening being sized to have a diameter greater than 400 mm.

13. Wheel hub (10) for an axle (1) of a heavy vehicle, said wheel hub (10) comprising a fixed portion (8) configured to be rigidly carried by one end (3, 4) of said axle (1) and a movable portion (9) configured to be carried in a rotationally free manner by said end (3, 4) of said axle (1) and with respect to said fixed portion (8), said fixed portion (8) and said movable portion (9) delimiting with said end (3, 4) a space (14) isolated from the external environment, said wheel hub (10) comprising an electric machine (15) housed in said space (14) and comprising a stator (15') carried integral with said fixed portion (8) and a rotor (15') operatively connected to said movable portion (9), said wheel hub (10) comprising a transmission (16) housed in said space (14) radially inside with respect to said rotor (15'') and connecting said rotor (15'') to said movable portion (19) so as to vary the speed/torque between said rotor (15'') and said movable portion (9), said wheel hub (10) comprising a wheel (30) according to one of the preceding claims.

14. Axle (1) extending along a longitudinal axis (A) and comprising a central portion (2) and a pair of end portions (3, 4) connected at the ends of said central portion (2) along said axis (A) and respective wheel hubs (10) according to claim 13 each carried by a respective end portion (3, 4).

15. Vehicle comprising an axle (1) according to claim 14.

## Patentansprüche

1. Rad (30), ausgebildet zur Verbindung mit einer Radnabe (10) einer Achse (1) eines Schwerlastfahrzeugs, welches Rad (30) eine Felge (31) umfasst, geeignet zur Zusammenwirkung mit einem Reifen eines Fahrzeugs, und eine Scheibe (32), die starr mit der Felge (31) verbunden ist und dazu ausgebildet ist, mit der Radnabe (10) verbunden zu werden, welche Scheibe (32) einen Kupplungsteil (33) umfasst, ausgebildet zur Verbindung der Scheibe (32) mit der Radnabe (10), und einen Strukturteil (34), der die Felge (31) mit dem Kupplungsteil (33) verbindet, welcher Strukturteil (34) entlang einer Achse (A) des Rads (30) geneigt ist und sich zwischen einem Verbindungsteil (34') mit der Felge (31) und dem Kupplungsteil (33) verjüngt, wobei der Neigungswinkel zwischen 15° und 25° beträgt,
welches Rad (30) **dadurch gekennzeichnet ist, dass** der Strukturteil (34) ein gewelltes Profil in Umfangsrichtung entlang der Achse (A) definiert.

2. Rad gemäß Anspruch 1, bei welchem der Neigungswinkel 20° beträgt.

3. Rad gemäß Anspruch 1 oder 2, bei welchem der Strukturteil (34) ein im Wesentlichen kegelstumpfförmiger Ring ist.

4. Rad gemäß einem der Ansprüche 1 bis 3, bei welchem das gewellte Profil eine Mehrzahl von Nuten (36) umfasst, die sich parallel zu der Achse (A) erstrecken und sich mit einer Mehrzahl von Rippen (37) abwechseln.

5. Rad gemäß Anspruch 4, bei welchem die Nuten (36) untereinander die gleiche Form aufweisen.

6. Rad gemäß Anspruch 4 oder 5, bei welchem die Rippen (37) untereinander die gleiche Form aufweisen.

7. Rad gemäß einem der Ansprüche 4 bis 6, bei welchem die Nuten (36) einen gekrümmten Querschnitt aufweisen.

8. Rad gemäß Anspruch 7, bei welchem der gekrümmte Querschnitt in Richtung der Felge (31) konkav ist.

9. Rad gemäß einem der Ansprüche 4 bis 8, bei welchem die Rippen eine flache und im Wesentlichen konstante Oberfläche zwischen dem Verbindungsteil (34') und dem Kupplungsteil (33) definieren.

10. Rad gemäß einem der vorhergehenden Ansprüche, bei welchem der Kupplungsteil sich radial in Bezug auf die Achse (A) erstreckt.

11. Rad gemäß einem der vorhergehenden Ansprüche, bei welchem der Kupplungsteil (33) die Form eines Rings aufweist.

12. Rad gemäß einem der vorhergehenden Ansprüche, bei welchem der Kupplungsteil (33) eine kreisförmige Öffnung begrenzt, welche kreisförmige Öffnung derart bemessen ist, dass sie einen Durchmesser größer als 400 mm aufweist.

13. Radnabe (10) für eine Achse (1) eines Schwerlastfahrzeugs, welche Radnabe (10) einen feststehenden Teil (8), dazu ausgebildet, starr durch ein Ende (3, 4) einer Achse (1) getragen zu werden, und einen beweglichen Teil (9) umfasst, dazu ausgebildet, frei drehbar durch das Ende (3, 4) der Achse (1) und in Bezug auf den feststehenden Teil (8) getragen zu werden, wobei der feststehende Teil (8) und der bewegliche Teil (9) mit dem Ende (3, 4) einen Raum (14) begrenzen, der von der äußeren Umgebung abgetrennt ist, wobei die Radnabe (10) eine elektrische Maschine (15) umfasst, die in den Raum (14) untergebracht ist und einen Stator (15'), der einteilig von dem feststehenden Teil (8) getragen wird, und einen Rotor (15') umfasst, der operativ mit den beweglichen Teilen (9) verbunden ist, wobei die Radnabe (10) ein Getriebe (16), das in dem Raum (14) radial innerhalb des Rotors (15") untergebracht ist und den Rotor (15") mit dem beweglichen Teil (19) verbindet, umfasst, um die Geschwindigkeit/das Drehmoment zwischen dem Rotor (15") und dem beweglichen Teil (9) zu verändern, wobei die Radnabe (10) ein Rad (30) gemäß einem der vorhergehenden Ansprüche umfasst.

14. Achse (1), die sich entlang einer Längsachse (A) erstreckt und einen zentralen Teil (2) und ein Paar von Endteilen (3, 4) umfasst, die an den Enden des zentralen Teils entlang der Achse (A) verbunden sind, und entsprechende Radnaben (10) gemäß Anspruch 13, von denen jede durch einen jeweiligen Endteil (3, 4) getragen wird.

15. Fahrzeug, umfassend eine Achse (1) gemäß Anspruch 14.

## Revendications

1. Roue (30) configurée pour être reliée à un moyeu de roue (10) d'un essieu (1) d'un véhicule lourd, ladite roue (30) comprenant une jante (31) adaptée pour coopérer avec un pneu dudit véhicule et un disque (32) relié rigidement à ladite jante (31) et configuré pour être relié audit moyeu de roue (10), ledit disque (32) comprenant une partie d'accouplement (33) configurée pour relier ledit disque (32) audit moyeu de roue (10) et une partie structurale (34) reliant ladite jante (31) à ladite partie d'accouplement (33), dans laquelle ladite partie structurale (34) est inclinée le long d'un axe (A) de ladite roue (30) et est effilée entre une partie de liaison (34') avec ladite jante (31) et ladite partie d'accouplement (33), ladite inclinaison étant comprise entre 15° et 25°,
ladite roue (30) étant **caractérisée en ce que** ladite partie structurale (34) définit un profil ondulé circonférentiellement le long dudit axe (A).

2. Roue selon la revendication 1, dans laquelle ladite inclinaison est de 20°.

3. Roue selon la revendication 1 ou 2, dans laquelle ladite partie structurale (34) est sensiblement une bague tronconique.

4. Roue selon la revendication 1 à 3, dans laquelle ledit profil ondulé comprend une pluralité de rainures (36) s'étendant parallèlement audit axe (A) alternées entre elles par une pluralité de crêtes (37).

5. Roue selon la revendication 4, dans laquelle lesdites rainures (36) ont la même forme les unes par rapport aux autres.

6. Roue selon la revendication 4 ou 5, dans laquelle lesdites crêtes (37) ont la même forme les unes par rapport aux autres.

7. Roue selon l'une quelconque des revendications 4 à 6, dans laquelle lesdites rainures (36) ont une section courbée.

8. Roue selon la revendication 7, dans laquelle ladite section courbée est concave vers ladite jante (31).

9. Roue selon l'une quelconque des revendications 4 à 8, dans laquelle lesdites crêtes définissent une surface plane et sensiblement constante entre ladite partie de liaison (34') et ladite partie d'accouplement (33).

10. Roue selon l'une quelconque des revendications précédentes, dans laquelle ladite partie d'accouplement (33) s'étend radialement par rapport audit axe (A).

11. Roue selon l'une quelconque des revendications précédentes, dans laquelle ladite partie d'accouplement (33) a la forme d'une bague.

12. Roue selon l'une quelconque des revendications précédentes, dans laquelle ladite partie d'accouplement (33) définit une ouverture circulaire, ladite ouverture circulaire étant dimensionnée pour avoir un diamètre supérieur à 400 mm.

13. Moyeu de roue (10) pour un essieu (1) d'un véhicule lourd, ledit moyeu de roue (10) comprenant une partie fixe (8) configurée pour être portée rigidement par une extrémité (3, 4) dudit essieu (1) et une partie mobile (9) configurée pour être portée de manière libre en rotation par ladite extrémité (3, 4) dudit essieu (1) et par rapport à ladite partie fixe (8), ladite partie fixe (8) et ladite partie mobile (9) délimitant avec ladite extrémité (3, 4) un espace (14) isolé de l'environnement extérieur, ledit moyeu de roue (10) comprenant une machine électrique (15) logée dans ledit espace (14) et comprenant un stator (15') porté solidaire de ladite partie fixe (8) et un rotor (15') relié fonctionnellement à ladite partie mobile (9), ledit moyeu de roue (10) comprenant une transmission (16) logée dans ledit espace (14) radialement à l'intérieur par rapport audit rotor (15") et reliant ledit rotor (15") à ladite partie mobile (19) de manière à faire varier la vitesse/couple entre ledit rotor (15") et ladite partie mobile (9), ledit moyeu de roue (10) comprenant une roue (30) selon l'une quelconque des revendications précédentes.

14. Essieu (1) s'étendant le long d'un axe longitudinal (A) et comprenant une partie centrale (2) et une paire de parties d'extrémité (3, 4) reliées au niveau des extrémités de ladite partie centrale (2) le long dudit axe (A) et de moyeux de roue (10) respectifs selon la revendication 13 chacune portée par une partie d'extrémité (3, 4) respective.

15. Véhicule comprenant un essieu (1) selon la revendication 14.
